# EUROPEAN PATENT APPLICATION

(11) **EP 2 897 427 A1**
(43) Date of publication of application: **22.07.2015**
(21) Application number: 12884479.2
(22) Date of filing: 11.09.2012
(51) Int. Cl.: H04W 52/28

(54) **WIRELESS CHARGER AND MULTI-TERMINAL WIRELESS CHARGING METHOD**

(71) Applicant: Yulong Computer Telecommunication Technologies (Shenzhen) Co., Ltd., Guangdong 518075 (CN); Dongguan Yulong Telecommunication Tech Co. Ltd., Guangdong 523808 (CN)
(72) Inventor: CHEN, Huaxing, Shenzhen Guangdong 518057 (CN)
(74) Representative: Dr. Weitzel & Partner
(86) International application number: PCT/CN2012/081264
(87) International publication number: WO 2014/040233

(57) **Abstract**

The present invention provides a wireless charger, comprising: a controller used for determining the priorities of at least two terminals in a wireless charging region of the wireless charger, and distributing charging electric energy to the at least two terminals according to the priorities. The present invention further provides a multi-terminal wireless charging method. With the technical schemes of the present invention, when a plurality of terminals are wirelessly charged at the same time, the distribution of electric energy can be optimized, thus improving the charging efficiency.

## Description

### Field of the Invention

The present invention relates to the technical field of wireless charging, and particularly relates to a wireless charger and a multi-terminal wireless charging method.

### Background of the Invention

At present, the wireless charging technology for terminals such as mobile phones is increasingly mature, and the market prospect is also increasingly clear. With a magnetic resonance charging manner in wireless charging, a plurality of terminals may be charged at the same time. When the plurality of terminals are charged at the same time by a wireless charger, electric energy is averagely distributed among the plurality of terminals, and optimal configuration of the electric energy may not be achieved in such a manner, so that the charging time of each terminal is prolonged, the waiting time of users is too long, and the terminals which urgently need to be charged and have high power consumption obtain low electric quantity due to untimely charging.

Thus, a multi-terminal wireless charging technology is needed, so that the distribution of electric energy may be optimized when a plurality of terminals are wirelessly charged at the same time, to improve the user experience.

### Summary of the Invention

For solving the above problems, the present invention provides a multi-terminal wireless charging technology, so that the distribution of electric energy may be optimized when a plurality of terminals are wirelessly charged at the same time, to improve the user experience.

According to an aspect of the present invention, provided is a wireless charger, including: a controller used for determining the priorities of at least two terminals in a wireless charging region of the wireless charger, and distributing charging electric energy to the at least two terminals according to the priorities.

Because the rated power of the wireless charger is limited, charging energy needs to be distributed to each terminal when a plurality of terminals are wirelessly charged at the same time by using the same wireless charger, and average distribution of the charging energy would lead to low charging efficiency. In this technical scheme, the distribution of the electric energy may be optimized by acquiring the priorities of the terminals, so that the charging efficiency and the user experience are improved. Preferably, the controller includes: a state acquisition unit for acquiring the power consumption and current electric quantity of the terminals; and a priority determination unit for determining the priorities of the terminals according to a predetermined distribution rule and the power consumption and current electric quantity of the terminals.

In this technical scheme, a predetermined distribution rule may be stored in the terminals, the distribution rule involves the power consumption and electric quantity of the terminals, and the priorities are obtained according to the acquired current power consumption and electric quantity of the terminals and the pre-stored distribution rule.

Preferably, the predetermined distribution rule adopted by the priority determination unit includes that the priorities of the terminals are inversely proportional to the current electric quantity of the terminals and directly proportional to the power consumption of the terminals.

In this technical scheme, provided is a distribution rule, namely the lower the electric quantity of a terminal is, the higher the priority is, meanwhile, the higher the power consumption of a terminal is, the higher the priority is. Generally, low electric quantity and high power consumption of the terminals mean that the terminals urgently need to be charged, and the terminals with high priorities obtain more electric quantity according to the distribution rule, thus avoiding too low electric quantity of the terminals which urgently need to be charged.

Preferably, the controller includes: a time acquisition unit for acquiring the time when the terminals enter the wireless charging region; and a priority determination unit for determining the priorities of the terminals according to the time of entering the wireless charging region.

In this technical scheme, the priorities are determined according to the time when the terminals enter the wireless charging region, namely the highest priority may be set for the terminal which enters the wireless charging region first according to a first-in first-out principle, and the electric energy distributed to the remaining terminals is sequentially distributed in a gradient manner. For example, there are five terminals to be charged in total, and the charging electric energy may be distributed according to 30%, 25%, 20%, 15% and 10%.

Preferably, the controller includes: a calculation unit for acquiring the power consumption and current electric quantity of the terminals and calculating the time for fully charging the terminals based on the power consumption, current electric quantity, charging current and required rated electric quantity of the terminals; and a priority determination unit for determining the priorities of the terminals according to the time calculated by the calculation unit for fully charging the terminals.

In this technical scheme, the priorities of the terminals are determined according to the time for fully charging the terminals, namely the highest priority may be set for the terminal needing the shortest charging time, so that high charging efficiency may be ensured.

In any above technical scheme, preferably, the controller further includes a time acquisition unit for acquiring the time when the terminals enter the wireless charging region; and the priority determination unit is also used for, when the power consumption and current electric quantity, acquired by the state acquisition unit, of the at least two terminals are identical (when the priorities may not be determined according to the power consumption and current electric quantity), further determining the priorities of the terminals according to the time when the terminals enter the wireless charging region.

In this technical scheme, the power consumption and current electric quantity of the terminals are acquired first by the state acquisition unit, the time when the terminals enter the wireless charging region is acquired by the time acquisition unit when the power consumption and current electric quantity of the at least two terminals are identical and the priorities may not be determined according to the power consumption and current electric quantity, and the priority determination unit determines the priorities of the terminals according to the time of entering the wireless charging region.

In any above technical scheme, preferably, the state acquisition unit is also used for acquiring the charging current and required rated electric quantity of the terminals; the controller further includes a calculation unit for calculating the time for fully charging the terminals based on the power consumption, current electric quantity, charging current and required rated electric quantity of the terminals; and the priority determination unit is also used for, when the power consumption and current electric quantity, acquired by the state acquisition unit, of the at least two terminals are identical (when the priorities may not be determined according to the power consumption and current electric quantity), determining the priorities of the terminals according to the time for fully charging the terminals, which is calculated by the calculation unit.

In this technical scheme, when the power consumption and current electric quantity of the at least two terminals are identical and the priority determination unit may not judge the priorities of the terminals accordingly, the state acquisition unit needs to further acquire the charging current and required rated electric quantity of the terminals, the calculation unit calculates the required charging time according to the charging current and required rated electric quantity of the terminals, and the priorities of the terminals are judged according to the charging time.

In the above technical scheme, preferably, the controller further includes a time acquisition unit for acquiring the time when the terminals enter the wireless charging region; and the priority determination unit is also used for, when the power consumption and current electric quantity, acquired by the state acquisition unit, of the at least two terminals are identical and the time calculated by the calculation unit for fully charging the at least two terminals is identical (namely the priorities may not be determined according to the power consumption and the current electric quantity or the required full charging time), determining the priorities of the terminals according to the time of entering the wireless charging region.

When the priorities may not be determined according to the charging time or the power consumption and the current electric quantity, the priorities of the terminals may be determined according to the time of entering the wireless charging region. Preferably, the wireless charger further includes: a judgment unit for judging whether the number of the terminals in the wireless charging region is greater than a preset value when the terminals enter the wireless charging region; and a prompt unit for prompting the terminals when the judging result of the judgment unit is yes.

In this technical scheme, the number of the terminals which may be simultaneously supported by the wireless charger to charge is limited, and when the number reaches the maximum supportable number and another terminal enters the wireless charging region, the terminal may not be charged, so prompt is needed.

Preferably, the controller is also used for newly determining the priorities of the terminals which are not fully charged in the wireless charging region when the terminals in the wireless charging region are fully charged, new terminals enter the wireless charging region, the number of the terminals in the wireless charging region is reduced and/or a predetermined time has passed since the time of determining the priorities of the terminals last time.

In this technical scheme, the priorities may be dynamically changed, and the priorities are newly determined when the charging electric energy needs to be redistributed. Preferably, when the wireless charger includes a plurality of antennas, the controller adjusts each antenna to be aligned with each terminal, and adjusts the radiant power of the corresponding antennas according to the priorities of the terminals.

In this technical scheme, the charging electric energy distributed to each terminal is adjusted by adjusting the radiant power of each antenna according to the priorities. At present, the general manner of adjusting the radiant power of each antenna is controlling the output power of an output PA (Power Amplifier) at the antenna end. Preferably, the wireless charger further includes: supports used for fixing the antennas; and a motor connected to the supports and the controller and used for driving the supports to rotate according to a control signal coming from the controller so as to adjust the radiation directions of the antennas.

In this technical scheme, the antennas of the wireless charger are directional antennas, and the directional antennas have the characteristic that the transmitting and receiving properties of the antennas are good in a certain direction or in several directions but very poor in other directions, so the supports need to be adjusted through the motor to rotate to adjust the radiation directions of the antennas and then the antennas may be aligned with the charged terminals.

According to another aspect of the present invention, provided is a multi-terminal wireless charging method, including: determining the priorities of terminals in a wireless charging region of a wireless charger, and distributing charging electric energy to the terminals according to the priorities.

Because the rated power of the wireless charger is limited, charging energy needs to be distributed to each terminal when a plurality of terminals are wirelessly charged at the same time by using the same wireless charger, and average distribution of the charging energy would lead to low charging efficiency. In this technical scheme, the distribution of the electric energy may be optimized by acquiring the priorities of the terminals, so that the charging efficiency and the user experience are improved. Preferably, the step of determining the priorities includes: acquiring the power consumption and current electric quantity of the terminals; and determining the priorities of the terminals according to a predetermined distribution rule and the power consumption and current electric quantity of the terminals.

In this technical scheme, a predetermined distribution rule may be stored in the terminals, the distribution rule involves the power consumption and electric quantity of the terminals, and the priorities are obtained according to the acquired current power consumption and electric quantity of the terminals and the pre-stored distribution rule.

Preferably, the predetermined distribution rule includes that the priorities of the terminals are inversely proportional to the current electric quantity of the terminals and directly proportional to the power consumption of the terminals.

In this technical scheme, provided is a distribution rule, namely the lower the electric quantity of a terminal is, the higher the priority is, meanwhile, the higher the power consumption of a terminal is, the higher the priority is. Generally, low electric quantity and high power consumption of the terminals mean that the terminals urgently need to be charged, and the terminals with high priorities obtain more electric quantity according to the distribution rule, thus avoiding too low electric quantity of the terminals which urgently need to be charged.

Preferably, the step of determining the priorities includes: acquiring the time when the terminals enter the wireless charging region; and determining the priorities of the terminals according to the time of entering the wireless charging region.

In this technical scheme, the priorities are determined according to the time when the terminals enter the wireless charging region, namely the highest priority may be set for the terminal which enters the wireless charging region first according to a first-in first-out principle, and the electric energy distributed to the remaining terminals is sequentially distributed in a gradient manner. For example, there are five terminals to be charged in total, and the charging electric energy may be distributed according to 30%, 25%, 20%, 15% and 10%.

Preferably, the step of determining the priorities includes: acquiring the power consumption and current electric quantity of the terminals, and calculating the time for fully charging the terminals based on the power consumption, current electric quantity, charging current and required rated electric quantity of the terminals; and determining the priorities of the terminals according to the time for fully charging the terminals.

In this technical scheme, the priorities of the terminals are determined according to the time for fully charging the terminals, namely the highest priority may be set for the terminal needing the shortest charging time, so that high charging efficiency may be ensured.

Preferably, before the step of determining the priorities of the terminals in the wireless charging region of the charger, the method includes: judging whether the number of the terminals in the wireless charging region is greater than a preset value when the terminals enter the wireless charging region; and prompting the terminals when the judging result is yes.

In this technical scheme, the number of the terminals which may be simultaneously supported by the wireless charger to charge is limited, and when the number reaches the maximum supportable number and another terminal enters the wireless charging region, the terminal may not be charged, so prompt is needed.

Preferably, when the terminals in the wireless charging region are fully charged, new terminals enter the wireless charging region, the number of the terminals in the wireless charging region is reduced and/or a predetermined time has passed since the time of determining the priorities of the terminals last time, the priorities of the terminals which are not fully charged in the wireless charging region are newly determined.

In this technical scheme, the priorities may be dynamically changed, and the priorities are newly determined when the charging electric energy needs to be redistributed. Preferably, when the wireless charger includes a plurality of antennas, each antenna is adjusted to be aligned with each terminal, and the radiant power of the corresponding antennas is adjusted according to the priorities of the terminals.

In this technical scheme, the charging electric energy distributed to each terminal is adjusted by adjusting the radiant power of each antenna according to the priorities. At present, the general manner of adjusting the radiant power of each antenna is controlling the output power of an output PA (Power Amplifier) at the antenna end. Preferably, supports are adopted for fixing the antennas, and the supports are driven by a motor to rotate so as to adjust the radiation directions of the antennas.

In this technical scheme, the antennas of the wireless charger are directional antennas, and the directional antennas have the characteristic that the transmitting and receiving properties of the antennas are good in a certain direction or in several directions but very poor in other directions, so the supports need to be adjusted through the motor to rotate to adjust the radiation directions of the antennas and then the antennas may be aligned with the charged terminals.

Through the above technical schemes, when a plurality of terminals are wirelessly charged at the same time, the distribution of electric energy may be optimized, thus improving the user experience.

### Brief Description of the Drawings

Fig. 1 shows a schematic diagram of a wireless charger according to an embodiment of the present invention;
Fig. 2A to Fig. 2C are schematic diagrams of a controller in the wireless charger of the embodiment shown in Fig. 1;
Fig. 3A shows a schematic diagram indicating that a terminal is charged by the wireless charger of the embodiment shown in Fig. 1;
Fig. 3B shows a schematic diagram of antenna direction control of the wireless charger of the embodiment shown in Fig. 1;
Fig. 4 shows a flow diagram of a multi-terminal wireless charging method according to an embodiment of the present invention;
Fig. 5 shows a schematic diagram of an implementation of a distribution rule in the embodiment shown in Fig. 4;
Fig. 6A shows a flow diagram of wireless charging of a terminal according to an embodiment of the present invention;
Fig. 6B shows a flow diagram of a multi-terminal wireless charging method according to another embodiment of the present invention.

### Detailed Description of the Embodiments

To understand the above purposes, features and advantages of the present invention more clearly, the present invention will be further described in detail below in combination with the accompanying drawings and specific implementations.

Many specific details are described below for sufficiently understanding the present invention. However, the present invention may also be implemented by adopting other manners different from those described herein. Accordingly, the protection scope of the present invention is not limited to the specific embodiments disclosed below.

The present invention will be further described below in combination with the accompanying drawings and the embodiments. It should be noted that, the embodiments of the present application and the features in the embodiments may be combined with one another without conflicts.

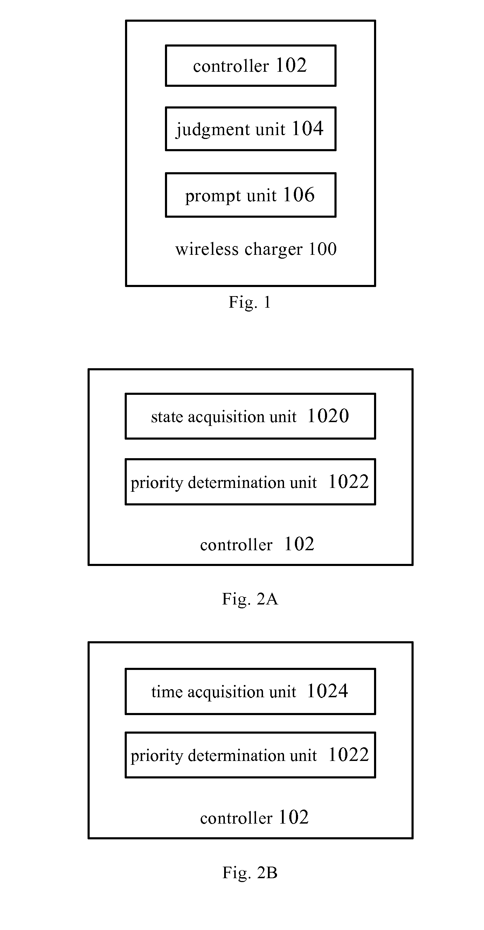

Fig. 1 shows a schematic diagram of a wireless charger according to an embodiment of the present invention.

As shown in Fig. 1, the wireless charger 100 according to the embodiment of the present invention includes: a controller 102 used for determining the priorities of at least two terminals in a wireless charging region of the wireless charger, and distributing charging electric energy to the at least two terminals according to the priorities.

Because the rated power of the wireless charger is limited, charging energy needs to be distributed to each terminal when a plurality of terminals are wirelessly charged at the same time by using the same wireless charger, and average distribution of the charging energy would lead to low charging efficiency. In this technical scheme, the distribution of the electric energy may be optimized by acquiring the priorities of the terminals, so that the charging efficiency of the terminals with relatively high priorities and the user experience are improved.

See Fig. 2A. In an implementation, the controller 102 may include: a state acquisition unit 1020 for acquiring the power consumption and current electric quantity of the terminals; and a priority determination unit 1022 for determining the priorities of the terminals according to a predetermined distribution rule and the power consumption and current electric quantity of the terminals.

In this technical scheme, a predetermined distribution rule may be stored in the terminals, the distribution rule involves the power consumption and electric quantity of the terminals, and the priorities are obtained according to the acquired current power consumption and electric quantity of the terminals and the pre-stored distribution rule.

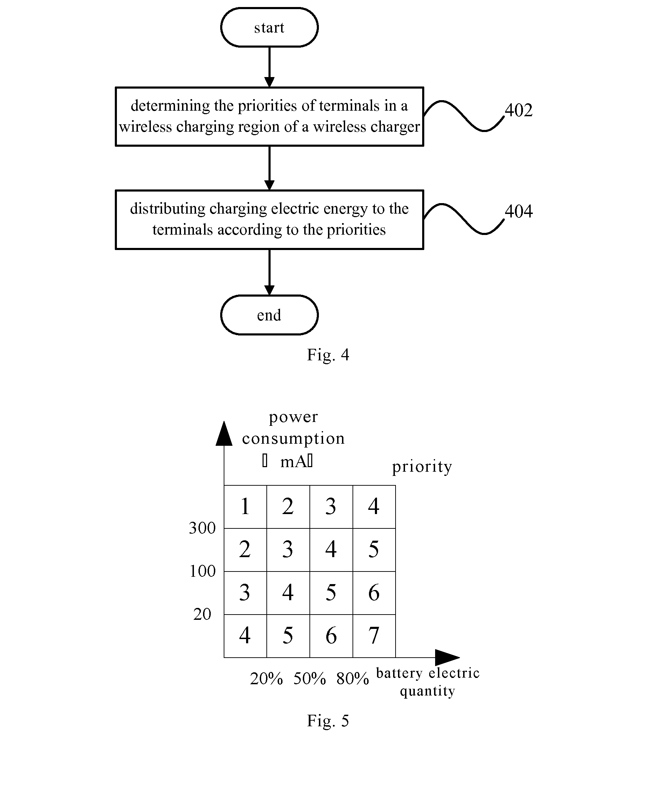

Preferably, the predetermined distribution rule adopted by the priority determination unit 1022 includes that the priorities of the terminals are inversely proportional to the current electric quantity of the terminals and directly proportional to the power consumption of the terminals, as shown in Fig. 5.

In this technical scheme, provided is a distribution rule, namely the lower the electric quantity of a terminal is, the higher the priority is, meanwhile, the higher the power consumption of a terminal is, the higher the priority is. Generally, low electric quantity and high power consumption of the terminals mean that the terminals urgently need to be charged, and the terminals with high priorities obtain more electric quantity according to the distribution rule, thus avoiding too low electric quantity of the terminals which urgently need to be charged.

See Fig. 2B. In another implementation, the controller 102 may include: a time acquisition unit 1024 for acquiring the time when the terminals enter the wireless charging region; and a priority determination unit 1022 for determining the priorities of the terminals according to the time of entering the wireless charging region.

In this technical scheme, the priorities are determined according to the time when the terminals enter the wireless charging region, namely the highest priority may be set for the terminal which enters the wireless charging region first according to a first-in first-out principle, and the electric energy distributed to the remaining terminals is sequentially distributed in a gradient manner. For example, there are five terminals to be charged in total, the priorities of the five terminals are sequenced according to the sequence of the time of entering the wireless charging region, and the charging electric energy may be distributed according to 30%, 25%, 20%, 15% and 10%.

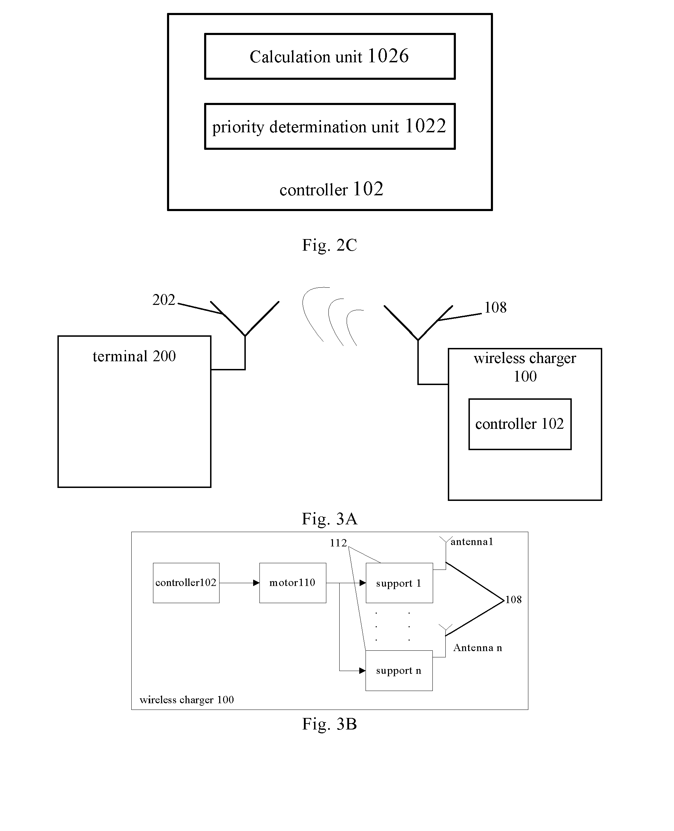

See Fig. 2C. In another implementation, the controller 102 may include: a calculation unit 1026 for acquiring the power consumption and current electric quantity of the terminals and calculating the time for fully charging the terminals based on the power consumption, current electric quantity, charging current and required rated electric quantity of the terminals; and a priority determination unit 1022 for determining the priorities of the terminals according to the time calculated by the calculation unit for fully charging the terminals.

In this technical scheme, the priorities of the terminals are determined according to the time for fully charging the terminals, namely the highest priority may be set for the terminal needing the shortest charging time, so that high charging efficiency may be ensured and the time when the terminals employ the wireless charger 100 may be shortened.

It should be noted that, although the embodiments of the controller shown in Fig. 2A to Fig. 2C are separately described, the functional modules of the controller may be combined with one another to form other embodiments.

For example, besides the state acquisition unit 1020, the controller 102 may further include a time acquisition unit 1024 for acquiring the time when the terminals enter the wireless charging region; and the priority determination unit 1022 is also used for, when the power consumption and current electric quantity, acquired by the state acquisition unit 1020, of the at least two terminals are identical (when the priorities may not be determined according to the power consumption and current electric quantity), further determining the priorities of the terminals according to the time when the terminals enter the wireless charging region.

Thus, the power consumption and current electric quantity of the terminals are acquired first by the state acquisition unit 1020, the time when the terminals enter the wireless charging region is acquired by the time acquisition unit 1024 when the power consumption and current electric quantity of the at least two terminals are identical and the priorities may not be determined according to the power consumption and current electric quantity, and the priority determination unit 1022 determines the priorities of the terminals according to the time of entering the wireless charging region.

For another example, the state acquisition unit 1020 in the controller 102 is also used for acquiring the charging current and required rated electric quantity of the terminals; the controller 102 further includes a calculation unit 1026 for calculating the time for fully charging the terminals based on the power consumption, current electric quantity, charging current and required rated electric quantity of the terminals; and the priority determination unit 1022 is also used for, when the power consumption and current electric quantity, acquired by the state acquisition unit 1020, of the at least two terminals are identical (when the priorities may not be determined according to the power consumption and current electric quantity), determining the priorities of the terminals according to the time for fully charging the terminals, which is calculated by the calculation unit 1026.

Thus, when the power consumption and current electric quantity of the at least two terminals are identical and the priority determination unit 1022 may not judge the priorities of the terminals accordingly, the state acquisition unit 1020 needs to further acquire the charging current and required rated electric quantity of the terminals, the calculation unit 1026 calculates the required charging time according to the charging current and required rated electric quantity of the terminals, and the priorities of the terminals are judged according to the charging time.

For another example, the controller 102 may include: a state acquisition unit 1020 for acquiring the power consumption and current electric quantity of the terminals; a calculation unit 1026 for calculating the time for fully charging the terminals based on the power consumption, current electric quantity, charging current and required rated electric quantity of the terminals; and a time acquisition unit 1024 for acquiring the time when the terminals enter the wireless charging region; wherein the priority determination unit 1022 is also used for, when the power consumption and current electric quantity, acquired by the state acquisition unit 1020, of the at least two terminals are identical and the time calculated by the calculation unit for fully charging the at least two terminals is identical (namely the priorities may not be determined according to the power consumption and the current electric quantity or the required full charging time), determining the priorities of the terminals according to the time of entering the wireless charging region.

When the priorities may not be determined according to the charging time or the power consumption and the current electric quantity, the priorities of the terminals may be determined according to the time of entering the wireless charging region. Preferably, the wireless charger 100 in each above embodiment may further include: a judgment unit 104 for judging whether the number of the terminals in the wireless charging region is greater than a preset value when the terminals enter the wireless charging region; and a prompt unit 106 for prompting the terminals when the judging result of the judgment unit is yes.

In this technical scheme, the number of the terminals which may be simultaneously supported by the wireless charger to charge is limited, and when the number reaches the maximum supportable number and another terminal enters the wireless charging region, the terminal may not be charged, so prompt is needed.

Preferably, the controller 102 in each above embodiment is also used for newly determining the priorities of the terminals which are not fully charged in the wireless charging region when the terminals in the wireless charging region are fully charged, new terminals enter the wireless charging region, the number of the terminals in the wireless charging region is reduced and/or a predetermined time has passed since the time of determining the priorities of the terminals last time.

In this technical scheme, the priorities may be dynamically changed, the priorities need to be newly determined for the terminals in the current wireless charging region when some terminals are fully charged, or some terminals are taken away or new terminals enter, and the charging electric energy needs to be redistributed, to adapt to the change of the charging environment.

See Fig. 3A, when the terminal 200 is charged by the wireless charger 100, the controller 102 adjusts the direction of a charging antenna 108, so that the charging antenna 108 is aligned with a receiving antenna 202 of the terminal 200 for charging. Preferably, when the wireless charger 100 includes a plurality of antennas, the controller 102 adjusts each antenna to be aligned with each terminal, and adjusts the radiant power of the corresponding antennas according to the priorities of the terminals.

In this technical scheme, the charging electric energy distributed to each terminal is adjusted by adjusting the radiant power of each antenna according to the priorities. At present, the general manner of adjusting the radiant power of each antenna is controlling the output power of an output PA (Power Amplifier) at the antenna end. See Fig. 3B. In an implementation, the wireless charger 100 may further include: supports 112 used for fixing the antennas 108; and a motor 110 connected to the supports 112 and the controller 102 and used for driving the supports 112 to rotate according to a control signal coming from the controller 102 so as to adjust the radiation directions of the antennas 108.

In this technical scheme, the antennas 108 of the wireless charger 100 are directional antennas, and the directional antennas have the characteristic that the transmitting and receiving properties of the antennas are good in a certain direction or in several directions but very poor in other directions, so the supports 112 need to be adjusted through the motor 110 to rotate to adjust the radiation directions of the antennas and then the antennas may be aligned with the charged terminals.

Fig. 4 shows a flow diagram of a multi-terminal wireless charging method according to an embodiment of the present invention.

As shown in Fig. 4, the multi-terminal wireless charging method according to the embodiment of the present invention includes: step 402, determining the priorities of terminals in a wireless charging region of a wireless charger; and step 404, distributing charging electric energy to the terminals according to the priorities. Because the rated power of the wireless charger is limited, charging energy needs to be distributed to each terminal when a plurality of terminals are wirelessly charged at the same time by the wireless charger, and average distribution of the charging energy would lead to low charging efficiency. In this technical scheme, the distribution of the electric energy may be optimized by acquiring the priorities of the terminals, so that the charging efficiency of the terminals with relatively high priorities and the user experience are improved.

Preferably, the step of determining the priorities includes: acquiring the power consumption and current electric quantity of the terminals; and determining the priorities of the terminals according to a predetermined distribution rule and the power consumption and current electric quantity of the terminals.

In this technical scheme, a predetermined distribution rule may be stored in the terminals, the distribution rule involves the power consumption and electric quantity of the terminals, and the priorities are obtained according to the acquired current power consumption and electric quantity of the terminals and the pre-stored distribution rule.

Preferably, the predetermined distribution rule includes that the priorities of the terminals are inversely proportional to the current electric quantity of the terminals and directly proportional to the power consumption of the terminals.

In this technical scheme, provided is a distribution rule, namely the lower the electric quantity of a terminal is, the higher the priority is, meanwhile, the higher the power consumption of a terminal is, the higher the priority is. Generally, low electric quantity and high power consumption of the terminals mean that the terminals urgently need to be charged, and the terminals with high priorities obtain more electric quantity according to the distribution rule, thus avoiding too low electric quantity of the terminals which urgently need to be charged. See the table shown in Fig. 5, which is a specific implementation of the distribution rule. For example, the battery electric quantity of the terminal A is 36%, the power consumption of the terminal A in a call is 230mA, and the priority of the terminal A is 3 by retrieving the table. After the priority is retrieved, the priority of the terminal A is compared with the priorities of other terminals in the wireless charging region, and if the priority of the terminal A is higher than the priorities of the other terminals, the distribution of the charging electric energy of the wireless charger is appropriately adjusted, so that the terminal A may obtain more electric energy relative to other terminals, and vice versa. Preferably, the step of determining the priorities includes: acquiring the time when the terminals enter the wireless charging region; and determining the priorities of the terminals according to the time of entering the wireless charging region.

In this technical scheme, the priorities are determined according to the time when the terminals enter the wireless charging region, namely the highest priority may be set for the terminal which enters the wireless charging region first according to a first-in first-out principle, and the electric energy distributed to the remaining terminals is sequentially distributed in a gradient manner. For example, there are five terminals to be charged in total, the priorities of the five terminals are sequenced according to the sequence of the time of entering the wireless charging region, and the charging electric energy may be distributed according to 30%, 25%, 20%, 15% and 10%.

Preferably, the step of determining the priorities includes: acquiring the power consumption and current electric quantity of the terminals, and calculating the time for fully charging the terminals based on the power consumption, current electric quantity, charging current and required rated electric quantity of the terminals; and determining the priorities of the terminals according to the time for fully charging the terminals.

In this technical scheme, the priorities of the terminals are determined according to the time for fully charging the terminals, namely the highest priority may be set for the terminal needing the shortest charging time, so that high charging efficiency may be ensured and the time when the terminals employ the wireless charger may be shortened.

Preferably, before the step of determining the priorities of the terminals in the wireless charging region of the charger, the method includes: judging whether the number of the terminals in the wireless charging region is greater than a preset value when the terminals enter the wireless charging region; and prompting the terminals when the judging result is yes.

In this technical scheme, the number of the terminals which may be simultaneously supported by the wireless charger to charge is limited, and when the number reaches the maximum supportable number and another terminal enters the wireless charging region, the terminal may not be charged, so prompt is needed.

Preferably, when the terminals in the wireless charging region are fully charged, new terminals enter the wireless charging region, the number of the terminals in the wireless charging region is reduced and/or a predetermined time has passed since the time of determining the priorities of the terminals last time, the priorities of the terminals which are not fully charged in the wireless charging region are newly determined.

In this technical scheme, the priorities may be dynamically changed, the priorities need to be newly determined for the terminals in the current wireless charging region when some terminals are fully charged, or some terminals are taken away or new terminals enter, and the priorities need to be newly determined when the charging electric energy is redistributed, to adapt to the change of the charging environment. Preferably, when the wireless charger includes a plurality of antennas, each antenna is adjusted to be aligned with each terminal, and the radiant power of the corresponding antennas is adjusted according to the priorities of the terminals.

In this technical scheme, the charging electric energy distributed to each terminal is adjusted by adjusting the radiant power of each antenna according to the priorities. At present, the general manner of adjusting the radiant power of each antenna is controlling the output power of an output PA (Power Amplifier) at the antenna end. Preferably, supports are adopted for fixing the antennas, and the supports are driven by a motor to rotate so as to adjust the radiation directions of the antennas.

In this technical scheme, the antennas of the wireless charger may be directional antennas, and the directional antennas have the characteristic that the transmitting and receiving properties of the antennas are good in a certain direction or in several directions but very poor in other directions, so the supports need to be adjusted through the motor to rotate to adjust the radiation directions of the antennas and then the antennas may be aligned with the charged terminals.

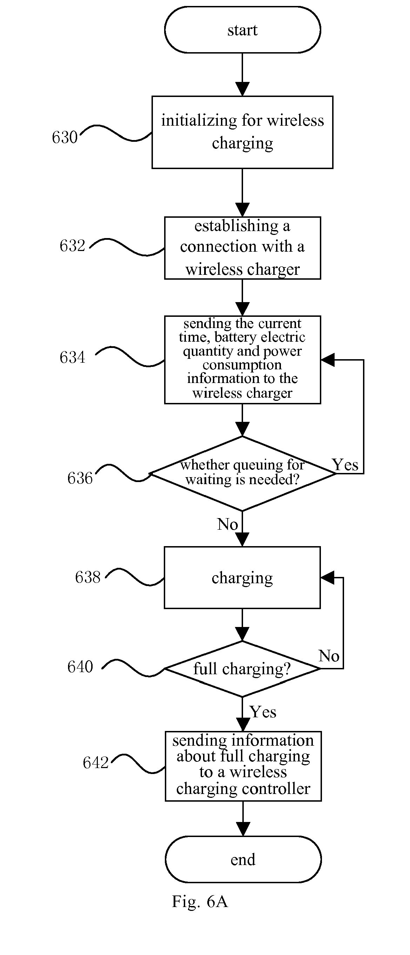

Fig. 6A shows a flow diagram of wireless charging of a terminal according to an embodiment of the present invention.

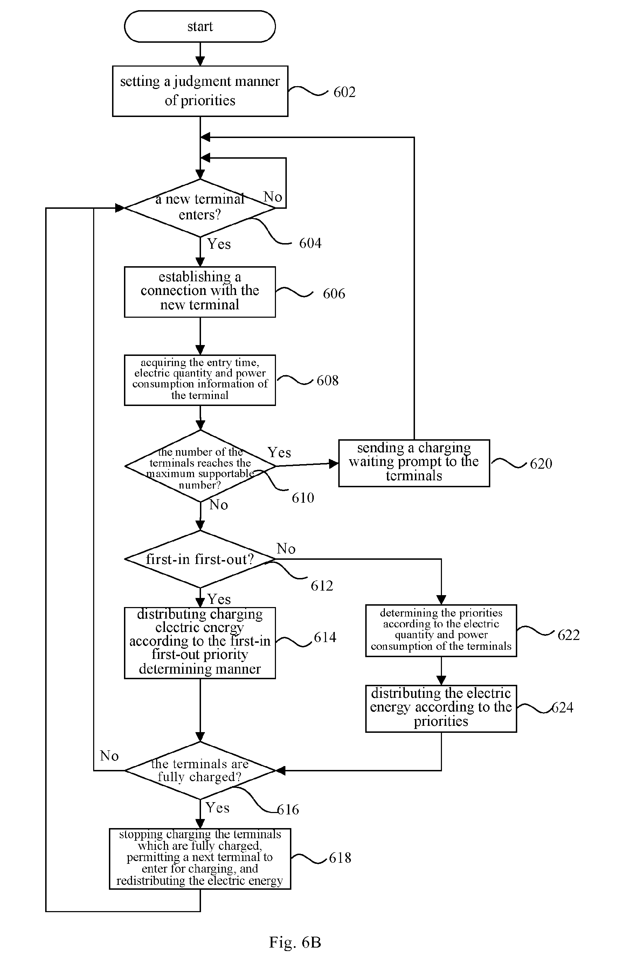

See Fig. 6A, the following flow is involved at a terminal:
step 630, initializing a terminal for wireless charging;
step 632, establishing a connection between the terminal and a wireless charger;
step 634, sending, by the terminal, the current time, current battery electric quantity and power consumption information to the wireless charger;
step 636, judging whether the terminal needs to queue for waiting, if so, further waiting, otherwise, entering step 638;
step 638, charging the terminal through the wireless charger;
step 640, judging whether the terminal is fully charged, if so, entering step 642, otherwise, further charging the terminal;
step 642, when the terminal is fully charged, sending a notification about full charging to the wireless charger.
See Fig 6B, the following flow is involved at a wireless charger:
step 602, setting a judgment manner of priorities, e.g. the judgment manner includes: a power consumption rule, namely the priorities of the terminals are inversely proportional to the current electric quantity of the terminals and directly proportional to the power consumption of the terminals; a first-in first-out principle, namely the priorities of the terminals are determined according to the time of entering the wireless charging region;
step 604, judging whether a new terminal enters the wireless charging region of the wireless charger, entering step 606 if the judging result is yes, and detecting whether a new terminal enters the wireless charging region if the judging result is no;
step 606, establishing a connection with the newly entering terminal;
step 608, acquiring the entry time, current electric quantity and power consumption information of the terminal;
step 610, judging whether the number of the terminals reaches the maximum supportable number of the wireless charger, if so, entering step 620, otherwise, entering step 612;
step 612, judging whether the determination manner of the priorities is a first-in first-out manner, if so, entering step 614, otherwise, entering step 622;
step 614, determining the priorities of the terminals according to the first-in first-out manner, and distributing charging electric energy to the terminals, wherein more electric energy is distributed to the first-in terminals;
step 616, judging whether the terminals are fully charged, if so, entering step 618; otherwise, returning to step 604; step 618, stopping charging the terminals which are fully charged, permitting a next terminal to enter, and redistributing the electric energy to the remaining terminals;
step 620, when the judging result of step 610 is yes, sending a charging waiting prompt to the terminals;
step 622, when the judging result of step 612 is no, determining the priorities of the terminals according to the current electric quantity and power consumption of the terminals;
step 624, distributing the charging electric energy to the terminals according to the priorities determined in step 622.

In conclusion, according to the multi-terminal wireless charging method of the present invention, when a plurality of terminals are wirelessly charged at the same time, the distribution of electric energy is optimized according to the electric energy distribution rule, so that the charging efficiency is greatly improved and the user experience is improved.

The foregoing descriptions are merely preferred embodiments of the present invention, rather than limiting the present invention. Various modifications and alterations may be made for those skilled in the art. Any modification, equivalent substitution, improvement or the like made within the spirit and principle of the present invention shall fall into the protection scope of the present invention.

## Claims

1. A wireless charger, comprising:
a controller used for determining the priorities of at least two terminals in a wireless charging region of the wireless charger, and distributing charging electric energy to the at least two terminals according to the priorities.

2. The wireless charger of claim 1, wherein the controller comprises:
a state acquisition unit for acquiring the power consumption and current electric quantity of the terminals; and
a priority determination unit for determining the priorities of the terminals according to a predetermined distribution rule and the power consumption and current electric quantity of the terminals.

3. The wireless charger of claim 2, wherein the predetermined distribution rule adopted by the priority determination unit comprises that the priorities of the terminals are inversely proportional to the current electric quantity of the terminals and directly proportional to the power consumption of the terminals.

4. The wireless charger of claim 1, wherein the controller comprises:
a time acquisition unit for acquiring the time when the terminals enter the wireless charging region; and
a priority determination unit for determining the priorities of the terminals according to the time of entering the wireless charging region.

5. The wireless charger of claim 1, wherein the controller comprises:
a calculation unit for acquiring the power consumption and current electric quantity of the terminals and calculating the time for fully charging the terminals based on the power consumption, current electric quantity, charging current and required rated electric quantity of the terminals; and
a priority determination unit for determining the priorities of the terminals according to the time calculated by the calculation unit for fully charging the terminals.

6. The wireless charger of any of claims 1 to 5, further comprising:
a judgment unit for judging whether the number of the terminals in the wireless charging region is greater than a preset value when the terminals enter the wireless charging region; and
a prompt unit for prompting the terminals when the judging result of the judgment unit is yes.

7. The wireless charger of any of claims 1 to 5, wherein the controller is also used for newly determining the priorities of the terminals which are not fully charged in the wireless charging region when the terminals in the wireless charging region are fully charged, new terminals enter the wireless charging region, the number of the terminals in the wireless charging region is reduced and/or a predetermined time has passed since the time of determining the priorities of the terminals last time.

8. The wireless charger of any of claims 1 to 5, wherein when the wireless charger comprises a plurality of antennas, the controller adjusts each antenna to be aligned with each terminal, and adjusts the radiant power of the corresponding antennas according to the priorities of the terminals.

9. The wireless charger of claim 8, further comprising:
supports used for fixing the antennas; and
a motor connected to the supports and the controller and used for driving the supports to rotate according to a control signal coming from the controller so as to adjust the radiation directions of the antennas.

10. A multi-terminal wireless charging method, comprising:
determining the priorities of terminals in a wireless charging region of a wireless charger, and
distributing charging electric energy to the terminals according to the priorities.

11. The multi-terminal wireless charging method of claim 10, wherein the step of determining the priorities comprises:
acquiring the power consumption and current electric quantity of the terminals; and
determining the priorities of the terminals according to a predetermined distribution rule and the power consumption and current electric quantity of the terminals.

12. The multi-terminal wireless charging method of claim 11, wherein the predetermined distribution rule comprises that the priorities of the terminals are inversely proportional to the current electric quantity of the terminals and directly proportional to the power consumption of the terminals.

13. The multi-terminal wireless charging method of claim 10, wherein the step of determining the priorities comprises:
acquiring the time when the terminals enter the wireless charging region; and
determining the priorities of the terminals according to the time of entering the wireless charging region.

14. The multi-terminal wireless charging method of claim 10, wherein the step of determining the priorities comprises:
acquiring the power consumption and current electric quantity of the terminals, and
calculating the time for fully charging the terminals based on the power consumption,
current electric quantity, charging current and required rated electric quantity of the terminals; and
determining the priorities of the terminals according to the time for fully charging the terminals.

15. The multi-terminal wireless charging method of any of claims 10 to 14, wherein before the step of determining the priorities of the terminals in the wireless charging region of the charger, the method comprises:
judging whether the number of the terminals in the wireless charging region is greater than a preset value when the terminals enter the wireless charging region; and
prompting the terminals when the judging result is yes.

16. The multi-terminal wireless charging method of any of claims 10 to 14, wherein when the terminals in the wireless charging region are fully charged, new terminals enter the wireless charging region, the number of the terminals in the wireless charging region is reduced and/or a predetermined time has passed since the time of determining the priorities of the terminals last time, the priorities of the terminals which are not fully charged in the wireless charging region are newly determined.

17. The multi-terminal wireless charging method of any of claims 10 to 14, wherein when the wireless charger comprises a plurality of antennas, each antenna is adjusted to be aligned with each terminal, and the radiant power of the corresponding antennas is adjusted according to the priorities of the terminals.

18. The multi-terminal wireless charging method of claim 17, wherein supports are adopted for fixing the antennas, and the supports are driven by a motor to rotate so as to adjust the radiation directions of the antennas.
